# EUROPÄISCHE PATENTSCHRIFT

(11) **EP 3 640 485 B1**
(45) Veröffentlichungstag und Bekanntmachung des Hinweises auf die Patenterteilung: **30.06.2021**
(21) Anmeldenummer: 19203994.9
(22) Anmeldetag: 18.10.2019
(51) Int. Cl.: B64C 1/14, B64F 5/10, F16B 11/00, B29C 65/00, B29C 65/48, B29L 12/00, B29L 31/30, B29L 31/00

(54) **VERFAHREN UND SYSTEM ZUM VERBINDEN ZWEIER BAUTEILE**
SYSTEM AND METHOD FOR CONNECTING TWO COMPONENTS
PROCÉDÉ ET SYSTÈME DE RACCORDEMENT DE DEUX COMPOSANTS

(30) Priorität: 19.10.2018 DE 102018125979
(43) Veröffentlichungstag der Anmeldung: 22.04.2020
(73) Patentinhaber: Airbus Operations GmbH, 21129 Hamburg (DE)
(72) Erfinder: Schulze, Wolfgang, 21129 Hamburg (DE); Eberle, Martin, 21129 Hamburg (DE)

(56) Entgegenhaltungen:
- EP-A1- 3 249 242
- EP-A2- 1 484 164
- WO-A1-2010/122325
- WO-A1-2015/064182
- DE-A1-102006 007 429
- JP-A- 2010 260 174
- US-A- 3 950 204
- US-A- 4 927 480
- US-A- 6 083 604
- US-A1- 2008 099 131
- US-A1- 2015 285 290
- US-A1- 2018 178 460
- US-B2- 9 713 901

## Beschreibung

### TECHNISCHES GEBIET

Die Erfindung betrifft ein Verfahren zum Verbinden zweier Bauteile sowie ein System zum Verbinden zweier Bauteile.

### HINTERGRUND DER ERFINDUNG

Im modernen Fahrzeugbau kommen unterschiedlichste Verbindungsverfahren zum Verbinden zweier Bauteile zum Einsatz. Die Art einer Verbindung hängt häufig von den verwendeten Materialien, der Größe der zu verbindenden Bauteile, deren Form und der vorgesehenen Belastung ab. Während bei der Verwendung von metallischen Fügepartnern oftmals Schweiß- oder Nietverfahren eingesetzt werden, werden großflächige Bauteile aus Kunststoffen oft geklebt. Werden unterschiedliche Materialien, etwa Kunststoffe und Metalle, eingesetzt, kann auch dort eine Verklebung erfolgen. Zur zusätzlichen Sicherung können Nietverwendungen eingesetzt werden, was jedoch eine aufwändigere Bearbeitung der Fügepartner erfordert.

Es ist bekannt, zur Herstellung präziser Verklebungen die Fügepartner und den Klebstoff einem Druck auszusetzen. Dadurch können mehrere Vorteile erreicht werden. Bei Polykondensationsklebstoffen können Spaltprodukte und insbesondere Wasser aus der Klebefuge ausgetrieben werden. Lösungsmittelreste können bei Lösungsmittelklebstoffen aus der Klebfuge entfernt werden. Auch kann die Adhäsion zwischen dem Klebstoff und den beiden Fügepartnern und die Benetzung verbessert werden, was zu einer verbesserten Belastbarkeit führt. Der Druck kann beispielsweise in einem Autoklaven aufgebracht werden. Der Klebstoff tritt nicht aus der Klebfuge und die Klebschichtdicke bleibt weitgehend konstant. Je steifer bzw. dicker die miteinander zu verklebenden Bauteile sind, desto höher ist der benötigte Druck, um Maßtoleranzen der Oberflächen in der Klebfuge auszugleichen.

Die Schrift DE102006007429 A1 offenbart ein Verfahren zum autoklavfreien Verkleben von Bauteilen zur Bildung von insbesondere großformatigen Strukturbauteilen für Luftfahrzeuge mit den folgenden Schritten:
- Aufbringen mindestens eines Klebefilms im Bereich von Verbindungsstellen der Bauteile,
- Positionieren und Ausrichten der Bauteile zueinander auf einer Unterstützungskonstruktion,
- Abdecken der ausgerichteten Bauteile mit einer Vakuumfolie zur Bildung eines Vakuumsacks,
- Anlegen eines Unterdrucks an den Vakuumsack, um durch den Umgebungsluftdruck einen ausreichenden Anpressdruck auf die Bauteile auszuüben, und
- Aushärten des mindestens einen Klebefilms zum endgültigen Verkleben der Bauteile, wobei das Aushärten des mindestens einen Klebefilms bei einer Temperatur erfolgt, die oberhalb der Raumtemperatur liegt.

### ZUSAMMENFASSUNG DER ERFINDUNG

Die Verwendung eines Autoklaven ist allerdings sehr aufwändig und kostenintensiv, insbesondere bei sehr großen, miteinander zu verbindenden Bauteilen. Es ist eine Aufgabe der Erfindung, ein Verfahren zum Verbinden zweier Bauteile vorzuschlagen, bei dem möglichst einfach ein Druck auf den Klebstoff zwischen zwei Fügepartnern eingebracht werden kann, ohne dass ein Autoklav notwendig ist.

Die Aufgabe wird gelöst durch ein Verfahren mit den Merkmalen des Anspruchs 1. Vorteilhafte Ausführungsformen und Weiterbildungen sind den Unteransprüchen und der nachfolgenden Beschreibung zu entnehmen.

Es wird ein Verfahren zum Verbinden zweier Bauteile vorgeschlagen, das Verfahren aufweisend die Schritte des Anordnens eines ersten Bauteils auf einer Werkzeugoberfläche, des Anordnens eines zweiten Bauteils, das einen Ausschnitt aufweist, auf dem ersten Bauteil unter Einschluss eines Klebstoffs, des Auflegens eines den Ausschnitt überdeckenden Hilfskörpers auf das zweite Bauteil, des Überdeckens des zweiten Bauteils, des Hilfskörpers und zumindest eines das zweite Bauteil umgebenden Abschlussbereichs des ersten Bauteils mit einer Vakuumfolie, des Evakuierens des von dem ersten Bauteil und der Vakuumfolie umschlossenen Raums und des Entfernens der Vakuumfolie nach Aushärten des Klebstoffs.

Das Anordnen eines ersten Bauteils auf einer Werkzeugoberfläche ist dahingehend zu verstehen, dass das erste Bauteil auf die Werkzeugoberfläche gelegt wird, so dass eine darauf befindliche vorgesehene Fügefläche von außen gut erreichbar ist. Die Fügefläche ist dann folglich bevorzugt auf einer von der Werkzeugoberfläche abgewandten Seite angeordnet.

Die Werkzeugoberfläche muss zudem nicht zwangsläufig durch eine durchgehend geschlossene Fläche gebildet sein, sondern es ist denkbar, dass auch einzelne Stützflächen zum Auflegen des ersten Bauteils vorliegen. Insbesondere größere Bauteile, etwa Rumpfschalen eines Flugzeugs oder dergleichen, könnten auf einem System aus Stützflächen oder Halteelementen angeordnet sein.

Das zweite Bauteil weist einen Ausschnitt auf, der beispielsweise zum Ausbilden eines Fensterrahmens genutzt wird. Das zweite Bauteil wird so auf das erste Bauteil gelegt, dass die Fügefläche des zweiten Bauteils auf der Fügefläche des ersten Bauteils liegt. Die Fügefläche des zweiten Bauteils kann etwa auf einem Rand um den Ausschnitt herum angeordnet sein.

Zudem wird der Klebstoff zwischen das erste Bauteil und das zweite Bauteil gebracht. Dies kann dadurch erfolgen, dass der Klebstoff auf die erste Fügefläche aufgebracht wird oder auf die zweite Fügefläche. Es kann auch vorteilhaft sein, auf beide Fügeflächen den Klebstoff aufzubringen. Es ist vorstellbar, dass der Klebstoff über eine Abgabevorrichtung dosiert auf die betreffende Fügefläche aufgebracht wird, beispielsweise geführt durch einen Roboter. Andererseits kann auch bei einer Kleinserienproduktion das manuelle Auftragen des Klebstoffs erfolgen. Es ist zudem denkbar, den Klebstoff als Klebstofffolie einzusetzen, die bei Raumtemperatur fest ist und erst durch Erwärmung flüssig wird und die Bauteile benetzend aushärtet.

Einen besonderen Vorteil bietet das Auflegen eines den Ausschnitt überdeckenden Hilfskörpers auf das zweite Bauteil. Dieser kann die Abmessungen des Ausschnitts übertreffen und bündig auf das zweite Bauteil aufgelegt werden. Eine Kraft, die auf den Hilfskörper ausgeübt wird, kann durch Berührungsflächen zwischen dem Hilfskörper und dem zweiten Bauteil auf das zweite Bauteil einwirken.

Liegt der Hilfskörper auf dem zweiten Bauteil auf und überdeckt dieser den Ausschnitt, werden das zweite Bauteil, der Hilfskörper und zumindest eines das zweiten Bauteil umgebenden Abschlussbereichs des ersten Bauteils mit einer Vakuumfolie überdeckt. Damit wird folglich ein abgedichteter Raum unterhalb der Vakuumfolie generiert, der evakuierbar ist. Durch das Evakuieren dieses Raums wirkt folglich der Umgebungsdruck über den Hilfskörper auf das zweite Bauteil, welches folglich den Klebstoff zwischen dem ersten Bauteil und dem zweiten Bauteil mit einer Druckkraft versieht. In diesem Zustand kann der Klebstoff ausgehärtet werden. Nach dem Aushärten wird die Vakuumfolie entfernt.

Das erfindungsgemäße Verfahren hat den besonderen Vorteil, dass ein Aushärten in einem Autoklaven nicht erforderlich ist, ohne jedoch auf die Beaufschlagung mit einem höheren Druck als durch ein Vakuum alleine erreichbar, d.h. etwa 0,9 bar, zu verzichten. Der höhere Druck zum Herstellen einer gewünschten Verklebung kann durch den aufgebrachten Hilfskörper trotz Ausschnitts des zweiten Bauteils erreicht werden. Damit ist eine deutlich leichtere und kostengünstigere Verklebung der beiden Bauteile miteinander möglich, denn die Verklebung kann lediglich durch ein Vakuum und gegebenenfalls mit einer Erwärmung in einer normalen Fertigungsumgebung außerhalb eines Autoklavs erreicht werden, ohne dass ein Zwischentransport oder eine andere Behandlung der beiden Fügepartner erforderlich ist.

Das erste Bauteil kann ein Faserverbundwerkstoff oder ein metallischer Werkstoff sein. Das zweite Bauteil kann unabhängig davon ebenso ein Faserverbundwerkstoff oder ein metallischer Werkstoff sein. Etwaige Verstärkungselemente, die weiter nachfolgend erwähnt werden, könnten ebenso unabhängig davon aus einem Faserverbundwerkstoff oder einem metallischen Werkstoff hergestellt sein.

Bevorzugt weist das Verfahren den Schritt des Erwärmens eines Zwischenraums zwischen dem ersten Bauteil und dem zweiten Bauteil, in dem sich der Klebstoff befindet. Das Erwärmen kann durch Beheizen der Werkzeugoberfläche, das erste Bauteil und/oder das zweite Bauteil erfolgen. Beispielhaft kann die Werkzeugoberfläche erwärmt werden, so dass das darauf befindliche erste Bauteil bzw. der Klebstoff erwärmt werden. Alternativ dazu kann auch das zweite Bauteil durch Auflegen von Heizelementen oder durch Wärmestrahlung erwärmt werden. Es ist denkbar, Heizmatten, einen Ofen, einen Durchlaufofen oder ähnliches einzusetzen. Es ist weiterhin vorstellbar, ein Klebstoffsystem einzusetzen, welches eine Temperatur von 100°C bis 450°C zum Aushärten benötigt. Es sind etwa Klebesysteme zur Verklebung von Faserverbundwerkstoffen bekannt, die bei einer Temperatur von 180°C aushärten. Es sind weiterhin auch andere Klebesysteme bekannt, die bei deutlich niedrigeren Temperaturen aushärten oder zum Aktivieren höheren Temperaturen ausgesetzt werden, etwa bei Faserverbundwerkstoffen mit einer thermoplastischen Matrix.

In einer vorteilhaften Ausführungsform weist das Verfahren ferner den Schritt des Einbringens eines Verstärkungselements zwischen das erste Bauteil und das zweite Bauteil auf, wobei zwischen dem ersten Bauteil und dem Verstärkungselement und zwischen dem Verstärkungselement und dem zweiten Bauteil Klebstoff eingeschlossen wird. Das Verstärkungselement kann zur Aufdickung eines Bereichs des ersten Bauteils verwendet werden, welches das zweite Bauteil trägt. Da das zweite Bauteil einen Ausschnitt aufweist kann es sinnvoll sein, das Verstärkungselement zum Aufdicken einer umlaufenden Randfläche um den Ausschnitt herum einzusetzen, so dass eine höhere Festigkeit vorliegt.

In einer vorteilhaften Ausführungsform weist das erste Bauteil einen ersten Ausschnitt auf und das zweite Bauteil weist einen zweiten Ausschnitt auf, wobei das zweite Bauteil derart auf das erste Bauteil aufgelegt wird, dass der erste Ausschnitt und der zweite Ausschnitt in Fluchtung zueinander ausgerichtet werden. Folglich kann die Fügefläche eine Randfläche um den ersten Ausschnitt herum sein, auf das sich ein entsprechender Abschnitt des zweiten Bauteils auflegen lässt. Eine solche Anordnung könnte beispielsweise an einer Rumpfschale eines Verkehrsflugzeugs realisiert sein, wobei der erste Ausschnitt ein Fensterausschnitt ist und das zweite Bauteil einen Fensterrahmen darstellt. Es ist besonders bevorzugt, dass dann das vorangehend genannte Verstärkungselement zwischen die beiden Bauteile eingebracht ist.

Eine vorteilhafte Ausführungsform kann ferner den Schritt des Verspannens des Hilfskörpers an dem Formwerkzeug mittels eines eine Zugkraft oder eine Druckkraft ausübenden Elements aufweisen. Ist ein Druck in der Klebschicht erforderlich, der durch alleinige Einwirkung des Vakuums auf den Hilfskörper nicht herstellbar ist, kann zur zusätzlichen Unterstützung der Hilfskörper verspannt werden. Die Verspannung kann durch das Ausüben einer Zugkraft in Richtung des Formwerkzeugs erreicht werden oder durch das Aufdrücken mithilfe einer Druckkraft auf eine Seite des Hilfskörpers, die von dem Formwerkzeug abgewandt ist. Je nach erforderlichem Druck kann die zusätzliche, auf den Hilfskörper wirkende Kraft gesteuert werden.

Es ist vorteilhaft, wenn das Verspannen das Einschrauben eines Bolzens durch eine in dem Hilfskörper angeordnete Öffnung umfasst. Das Formwerkzeug kann für diesen Zweck beispielsweise eine Gewindebohrung aufweisen, in die ein Bolzen einschraubbar ist. Für diesen Zweck sollte auch das erste Bauteil einen Ausschnitt aufweisen, durch den sich der Bolzen in das Formwerkzeug erstrecken kann. Hierdurch kann sehr leicht die zusätzliche, auf den Hilfskörper wirkende Kraft gesteuert werden, indem beispielsweise das Anzugdrehmoment des Bolzens eingestellt wird.

Allerdings kann das Verspannen auch das Anpressen des Hilfskörpers auf das zweite Bauteil mit einem Aktuator umfassen. Der Aktuator kann auf den Hilfskörper pressen und hierzu eine geeignete Kontaktfläche bereitstellen. Der Aktuator ist auf einer von dem Formwerkzeug abgewandten Seite des Hilfskörpers angeordnet und beispielsweise an einem starren Rahmen gehaltert. Dieser kann starr mit dem Formwerkzeug verbunden sein. Der Aktuator kann ein Hydraulikaktuator oder ein pneumatischer Aktuator sein. Zur präzisen Steuerung der Kraft ist vorstellbar, eine Kraftmesseinheit einzusetzen, welche mit einer Regeleinheit gekoppelt ist, die wiederum den Aktuator ansteuert. Bei der Verwendung insbesondere eines Hydraulikaktuators könnte dies sinnvoll sein, um eine übermäßige Krafteinwirkung zu vermeiden. Selbstverständlich könnten auch Spindelgetriebe oder ähnliche Linearantriebe eingesetzt werden, die nicht auf einem druckbeaufschlagten Fluid basieren. Dort könnte ein Drehmoment überwacht werden, um eine auf den Hilfskörper wirkende Druckkraft zu beschränken.

Wird ein pneumatische Aktuator eingesetzt, könnte dieser mit einer Vakuumquelle gekoppelt werden, die zum Evakuieren verwendet wird. Hierdurch ergibt sich ein geringerer Konstruktionsaufwand, denn es ist keine separate Druckquelle notwendig, um den Aktuator zu bewegen. Zusätzlich dazu kann auch die entstehende Druckkraft auf den Hilfskörper deutlich beschränkt werden, denn durch die Vakuumquelle könnte ein Druck von höchstens ungefähr 0,95 bar erreicht werden, der auf eine wirksame Fläche des Aktuators wirkt.

Das zweite Bauteil weist einen mindestens bereichsweise den Ausschnitt umlaufenden Flansch auf, der sich von dem zweiten Bauteil in eine von dem ersten Bauteil abgewandte Richtung erstreckt, wobei der Hilfskörper auf den Flansch aufgelegt wird. Diese Anordnung, welche etwa für einen Fensterrahmen eines Verkehrsflugzeugs realisiert wird, erlaubt eine gute Krafteinleitung von dem Hilfskörper in das zweite Bauteil. Der Hilfskörper könnte eine an den Flansch angepasste, umlaufende Nut aufweisen, welche in Kontakt mit einer Außenkante des Flanschs bringbar ist.

Die Erfindung betrifft ferner ein System zum Verbinden zweier Bauteile, das System aufweisend ein Formwerkzeug, einen Hilfskörper, eine Vakuumfolie, eine Vakuumquelle, und einen Klebstoff, wobei das Formwerkzeug eine Werkzeugoberfläche zum Aufnehmen eines ersten Bauteils aufweist, wobei der Hilfskörper dazu ausgebildet ist, auf ein zweites Bauteil aufgelegt zu werden und dabei einen Ausschnitt des zweiten Bauteils zu überdecken, wobei die Vakuumfolie dazu ausgebildet ist, das auf das erste Bauteil aufgelegte zweite Bauteil unter Einschluss des Klebstoffs, den auf das zweite Bauteil aufgelegten Hilfskörper und zumindest einen das zweite Bauteil umgebenden Abschlussbereich des ersten Bauteils abzudecken, und wobei die Vakuumquelle mit mindestens einer Öffnung in der Vakuumfolie oder dem Formwerkzeug koppelbar ist, so dass ein von dem ersten Bauteil und der Vakuumfolie umschlossener Raum evakuierbar ist. Es ist vorstellbar, dass das erfindungsgemäße System das vorangehend dargestellte Verfahren ausführen kann.

Die Werkzeugoberfläche kann eine kontinuierliche, teilweise unterbrochene oder aus lediglich einzelnen Auflageflächen bestehen und dazu ausgebildet sein, dass das erste Bauteil darauf aufgelegt werden kann.

Der Hilfskörper könnte aus einem ausreichend stabilen Material bestehen, welches für den Einsatzzweck geeignet ist. Da der Hilfskörper lediglich als ein Werkzeug dient, kann dieses eine Platte aus Holz, Holzfasern, einem Kunststoff, Metall oder anderen Materialien bestehen.

Die Vakuumquelle könnte insbesondere in Form eines Absauggebläses ausgeführt sein. Durch eine Öffnung in der Vakuumfolie kann eine Verbindung zu der Vakuumquelle hergestellt werden, so dass Luft aus dem von der Vakuumfolie umschlossenen Raum abgesaugt wird und folglich der Umgebungsdruck auf die unterhalb der Vakuumfolie liegenden Komponenten einwirkt.

Bevorzugt weist der Hilfskörper eine gleitfähige Beschichtung auf. Beispielhaft könnte diese Polytetrafluorethylen aufweisen. Damit kann sichergestellt werden, dass die Vakuumfolie auch nach einer Erwärmung leicht von dem Hilfskörper ablösbar ist und der Hilfskörper folglich mehrfach verwendbar ist.

In einer vorteilhaften Ausführungsform weist die Werkzeugoberfläche eine Gewindebohrung auf, wobei der Hilfskörper eine Öffnung aufweist, die mit der Gewindebohrung bei vorgesehenen Positionen des ersten Bauteils, des zweiten Bauteils und des Hilfskörpers fluchtet, und wobei das System ferner einen Bolzen mit einem mit der Gewindebohrung korrespondierendem Gewinde zum Verspannen des Hilfskörpers an dem Formwerkzeug aufweist.

Wie vorangehend ausgeführt kann das System ferner einen Aktuator zum Pressen des Hilfskörpers auf das zweite Bauteil aufweisen. Wie ebenso dargelegt, kann der Aktuator ein pneumatischer Aktuator, ein hydraulischer Aktuator oder ein Linearantrieb sein. Es könnte sich anbieten, bei der Verwendung eines pneumatischen Aktuators eine Kopplung mit der Vakuumquelle durchzuführen, so dass die Komplexität des Systems gesenkt werden kann.

Das System kann zudem ferner eine mit dem Aktuator gekoppelte Kraftregeleinheit aufweisen, die dazu ausgebildet ist, die von dem Aktuator auf den Hilfskörper einwirkende Kraft zu erfassen und auf einen vorbestimmten Wert einzustellen. Durch die Kraftregeleinheit kann die auf den Hilfskörper wirkende Kraft begrenzt werden, so dass die auf die Klebschicht wirkende Druckkraft exakt eingestellt ist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 zeigt eine Schnittdarstellung eines erfindungsgemäßen Systems zum Verbinden von Bauteilen.
Fig. 2 zeigt eine Schnittdarstellung eines modifizierten Systems zum Verbinden von Bauteilen.
Fig. 3 zeigt eine Schnittdarstellung eines weiteren, modifizierten Systems zum Verbinden von Bauteilen.
Fig. 4 zeigt eine schematische, blockbasierte Darstellung eines Verfahrens zum Verbinden von Bauteilen.

### DETAILLIERTE DARSTELLUNG EXEMPLARISCHER AUSFÜHRUNGSFORMEN

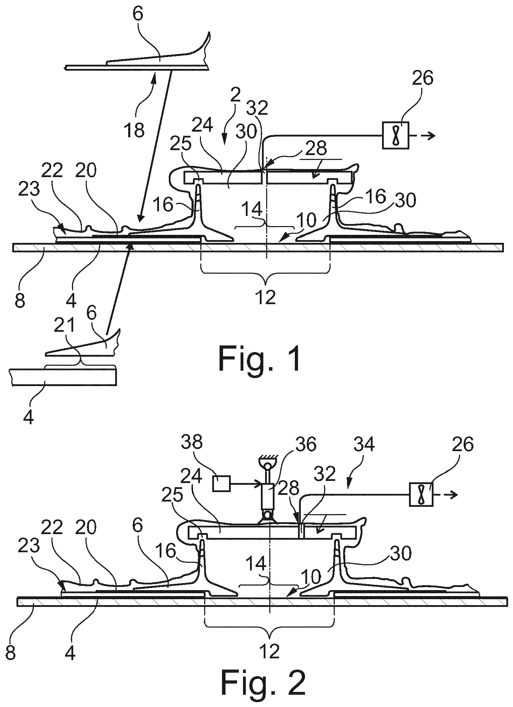

Fig. 1 zeigt eine Schnittdarstellung eines Systems 2 zum Verbinden eines ersten Bauteils 4 und eines zweiten Bauteils 6. Ein Formwerkzeug 8 weist eine Werkzeugoberfläche 10 auf, auf die das erste Bauteil 4 aufgelegt ist. In dieser Darstellung ist die Werkzeugoberfläche 10 durchgehend, d.h. kontinuierlich, ausgeführt. Dies könnte jedoch auch abgewandelt werden, solange sichergestellt wird, dass eine darauf befindliche Anordnung luftdicht und evakuierbar ist.

Das erste Bauteil 4 ist beispielhaft eine Rumpfschale eines Verkehrsflugzeugs, die an der gezeigten Stelle einen ersten Ausschnitt 12 aufweist. Dieser ist beispielhaft ein Fensterausschnitt und rund, oval oder weitgehend viereckig mit abgerundeten Ecken. Das zweite Bauteil 6 ist ein später im fertiggestellten Flugzeugrumpf innenliegender Fensterrahmen mit einem zweiten Ausschnitt 14, der mit dem ersten Ausschnitt 12 fluchtet.

Das zweite Bauteil 6 weist zudem einen den zweiten Ausschnitt 14 umlaufenden Flansch 16 auf, der sich von dem zweiten Bauteil 6 in eine von dem ersten Bauteil 4 abgewandte Richtung erstreckt. Der Flansch 16 folgt etwa einer Kante des ersten Ausschnitts 12 und kann dadurch ein Abschnitt einer Mantelfläche eines Hohlzylinders oder eines Hohlkegels sein.

Zum Verbinden des ersten Bauteils 4 und des zweiten Bauteils 6 weist das zweite Bauteil 6 eine Auflagefläche 18, die beispielhaft radial außerhalb des Flanschs 16 liegt. Die Auflagefläche 18 dient zur Herstellung eines Flächenkontakts zwischen dem zweiten Bauteil 6 und dem Fügepartner. Dieser ist hier beispielhaft in Form eines Verstärkungselements 20 dargestellt, welches zur Aufdickung einer den ersten Ausschnitt 12 umlaufenden Randfläche 21 des ersten Bauteils 4 eingesetzt wird. Die Auflagefläche 18 wird folglich auf das Verstärkungselement 20 geklebt, welches indes auf die Randfläche 21 geklebt wird. Das Verstärkungselement 20 kann jedoch auch weggelassen werden, wenn eine Aufdickung nicht erforderlich ist. Die Auflagefläche 18 wird dann folglich auf die Randfläche 21 geklebt.

In dem gezeigten Beispiel ist zwischen dem ersten Bauteil 4 und dem Verstärkungselement 20 sowie zwischen dem Verstärkungselement 20 und dem zweiten Bauteil 6 jeweils eine Schicht Klebstoff vorhanden. Dieser könnte als wärmehärtbarer Klebstoff ausgeführt sein.

Zum Anpressen der Bauteile 4 und 6 aufeinander wird eine Vakuumfolie 22 eingesetzt, die auf das erste Bauteil 4 aufgeklebt sein könnte und dabei das zweite Bauteil 6 vollständig überdeckt. Der Klebstoff wird nach Evakuierung mit einem Druck beaufschlagt, um die Qualität der Verklebung zu optimieren. Da allerdings das zweite Bauteil 6 den zweiten Ausschnitt 14 aufweist, ist durch ein reines Auflegen der Vakuumfolie 22 aufgrund der begrenzten Auflagefläche nicht damit zu rechnen, dass eine ausreichende Druckkraft hervorgerufen werden kann.

Um diese zu steigern, ist ein Hilfskörper 24 vorgesehen, der auf den Flansch 16 aufgelegt wird und dabei den zweiten Ausschnitt 14 vollständig überdeckt. Der Hilfskörper 24 weist beispielhaft eine umlaufende Nut 25 auf, die an die Form des Flanschs 16 angepasst ist. Die Nut 25 kann bündig auf den Flansch 16 aufgelegt werden.

Die vollständige Anordnung aus Formwerkzeug 8, erstem Bauteil 4, zweitem Bauteil 6 und Hilfskörper 24 wird durch die Vakuumfolie 22 abgedeckt. Diese erstreckt sich bis zu einem Abschlussbereich 23, der deutlich außerhalb des zweite Bauteils 6 liegt. Nach Evakuierung des darunterliegenden Raums wirkt die gesamte, durch eine Außenkontur des zweiten Bauteils 6 bestimmte Fläche zur Entstehung einer Druckkraft in Richtung des Formwerkzeugs 8. Der Hilfskörper 24 führt zur Einleitung einer vergleichsweise großen Druckkraft auf den Flansch 16, so dass der radial außerhalb liegende Klebstoff mit einer vorbestimmten Druckkraft belastet und folglich einem gewünschten Druck ausgesetzt wird.

Eine Vakuumquelle 26, welche schematisch als Block dargestellt ist, kann mit einer Öffnung 28 der Vakuumfolie 22 gekoppelt sein und Luft aus einem Innenraum 30 unterhalb der Vakuumfolie 22 absaugen. Die Öffnung 28 kann mit einer Durchgangsbohrung 32 des Hilfskörpers 24 in Fluchtung sein. Alternativ könnte eine solche Öffnung auch in dem Formwerkzeug 8 integriert sein. Durch das Evakuieren legt sich die Vakuumfolie 22 auf sämtliche darunter befindlichen Komponenten an und drückt diese in Richtung der Werkzeugoberfläche 10. Der Klebstoff wird folglich einem gewünschten Druck ausgesetzt.

Die Verbindung der beiden Bauteile 4 und 6 kann folglich außerhalb eines Autoklaven erfolgen. Insbesondere größere Bauteile können mit einem solchen System bearbeitet werden.

Sollte jedoch der durch das System 2 erzielte Druck noch nicht ausreichen, könnte der Hilfskörper 24 zusätzlich verspannt werden. Hierzu könnte ein in Fig. 2 gezeigtes modifiziertes System 34 eingesetzt werden, in dem zusätzlich zu den Komponenten in Fig. 1 auch ein schematisch dargestellter Aktuator 36 vorgesehen ist. Dieser wirkt auf den Hilfskörper 24 ein. Der Aktuator 36 kann ein Hydraulik- oder Pneumatikaktuator sein und mit einem druckbeaufschlagten Fluid versorgt werden. Die von dem Aktuator 36 ausgeübte Kraft kann durch Regelung des an den Aktuator 36 angelegten Drucks justiert werden. Alternativ dazu kann der Aktuator 36 auch ein Spindelgetriebe aufweisen, das mit einem Elektromotor gekoppelt ist. Der Einfachheit halber sind keine Fluidleitungen und keine elektrischen Leitungen dargestellt, die zum Betreiben des Aktuators 36 notwendig sind.

Es ist außerdem vorstellbar, dass der Aktuator 36 mit einer Kraftregeleinheit 38 gekoppelt ist, die eine auf dem Hilfskörper 24 durch den Aktuator 36 ausgeübte Kraft begrenzt. Hierzu kann eine Kraftmesseinrichtung vorgesehen sein, welche die auf den Hilfskörper 24 ausgeübte Kraft misst und in Abhängigkeit davon den Aktuator 36 ansteuert.

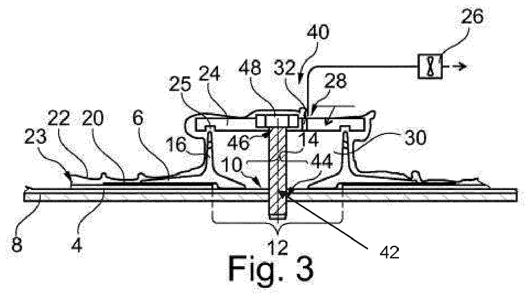

Wie in Fig. 3 anhand eines weiteren modifizierten Systems 40 kann auch ein Bolzen 42 eingesetzt werden, der sich in eine Gewindebohrung 44 des Formwerkzeugs 8 erstreckt und durch eine entsprechende Öffnung 46 des Hilfskörpers 24 geführt ist. Durch Einschrauben des Bolzens 42 durch die Öffnung 46 in die Gewindebohrung 44 kann eine zusätzliche, auf das zweite Bauteil 6 einwirkende Druckkraft eingestellt werden. Besonders bevorzugt kann die zusätzliche Druckkraft durch Verwendung eines Drehmomentschlüssels an einem Schraubkopf 48 des Bolzens 42 präzise eingestellt werden.

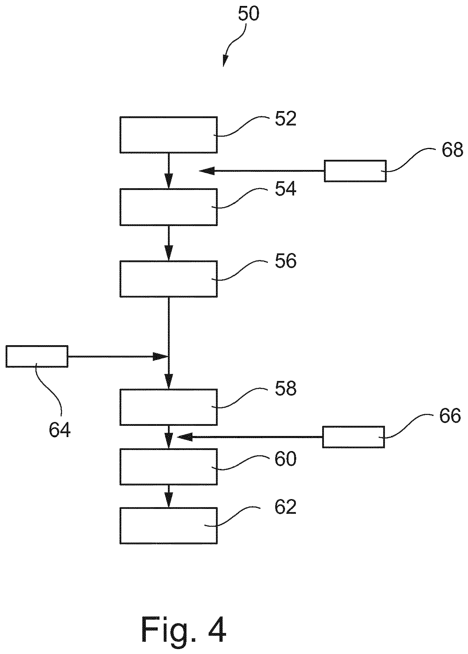

Fig. 4 zeigt schließlich eine schematische, blockbasierte Darstellung eine Verfahrens 50 zum Verbinden zweier Bauteile 4 und 6. Das Verfahren 50 weist den Schritt des Anordnens 52 des ersten Bauteils 4 auf der Werkzeugoberfläche 10 auf. Anschließend wird das zweite Bauteil 6, das den Ausschnitt 14 aufweist, auf dem ersten Bauteil 4 unter Einschluss eines Klebstoffs gelegt 54. Der den zweiten Ausschnitt 14 überdeckende Hilfskörper 24 wird auf das zweite Bauteil 6 gelegt 56. Weiterhin werden das zweite Bauteil 6, der Hilfskörper 24 und zumindest eines das zweite Bauteil 6 umgebenden Abschlussbereichs des ersten Bauteils 4 mit der Vakuumfolie 22 überdeckt 58. Der von dem ersten Bauteil 4 und der Vakuumfolie 22 umschlossene Raum 30 wird anschließend evakuiert 60. Nach dem Aushärten des Klebstoffs wird die Vakuumfolie 22 entfernt 62. Optional kann der Hilfskörper vor dem Überdecken 58 auch verspannt werden 64. Des Weiteren kann nach dem Überdecken 58 ein Zwischenraum zwischen dem ersten Bauteil 4 und dem zweiten Bauteil 6, in dem sich der Klebstoff befindet, erwärmt werden 66. Ebenfalls optional kann das Verstärkungselement 20 zwischen das erste Bauteil 4 und das zweite Bauteil 6 eingebracht werden 68, so dass eine Verstärkung insbesondere eines Randbereichs um den ersten Ausschnitt 12 erfolgt.

Ergänzend sei darauf hingewiesen, dass "aufweisend" keine anderen Elemente oder Schritte ausschließt, und "ein" oder "eine" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: System
- 4: erstes Bauteil
- 6: zweites Bauteil
- 8: Formwerkzeug
- 10: Werkzeugoberfläche
- 12: erster Ausschnitt
- 14: zweiter Ausschnitt
- 16: Flansch
- 18: Auflagefläche
- 20: Verstärkungselement
- 21: Randfläche
- 22: Vakuumfolie
- 23: Abschlussbereich
- 24: Hilfskörper
- 25: Nut
- 26: Vakuumquelle
- 28: Öffnung
- 30: Innenraum
- 32: Durchgangsbohrung
- 34: System
- 36: Aktuator
- 38: Kraftregeleinheit
- 40: System
- 42: Bolzen
- 44: Gewindebohrung
- 46: Öffnung
- 48: Schraubkopf
- 50: Verfahren
- 52: Anordnen des ersten Bauteils
- 54: Anordnen des zweiten Bauteils
- 56: Auflegen des Hilfskörpers
- 58: Überdecken mit Vakuumfolie
- 60: Evakuieren
- 62: Entfernen der Vakuumfolie
- 64: Verspannen des Hilfskörpers
- 66: Erwärmen
- 68: Einbringen des Verstärkungselements

## Patentansprüche

1. Verfahren (50) zum Verbinden zweier Bauteile, aufweisend die Schritte:
- Anordnen (52) eines ersten Bauteils (4) auf einer Werkzeugoberfläche (10),
- Anordnen (54) eines zweiten Bauteils (6), das einen Ausschnitt (14) aufweist, auf dem ersten Bauteil (4) unter Einschluss eines Klebstoffs,
- Auflegen (56) eines den Ausschnitt (14) überdeckenden Hilfskörpers (24) auf das zweite Bauteil (6),
- Überdecken (58) des zweiten Bauteils (6), des Hilfskörpers (24) und zumindest eines das zweite Bauteil (6) umgebenden Abschlussbereichs (23) des ersten Bauteils (4) mit einer Vakuumfolie (22),
- Evakuieren (60) des von dem ersten Bauteil (4) und der Vakuumfolie (22) umschlossenen Raums (30) und
- Entfernen der Vakuumfolie (22) nach Aushärten des Klebstoffs,
**dadurch gekennzeichnet, dass**
das zweite Bauteil (6) einen mindestens bereichsweise den Ausschnitt (14) umlaufenden Flansch (16) aufweist, der sich von dem zweiten Bauteil (6) in eine von dem ersten Bauteil (4) abgewandte Richtung erstreckt, wobei der Hilfskörper (24) auf den Flansch (16) aufgelegt wird.

2. Verfahren (50) nach Anspruch 1,
ferner aufweisend den Schritt des Erwärmens (66) eines Zwischenraums zwischen dem ersten Bauteil (4) und dem zweiten Bauteil (6), in dem sich der Klebstoff befindet.

3. Verfahren (50) nach Anspruch 1 oder 2,
ferner aufweisend den Schritt des Einbringens (68) eines Verstärkungselements (20) zwischen das erste Bauteil (4) und das zweite Bauteil (6), wobei zwischen dem ersten Bauteil (4) und dem Verstärkungselement (20) und zwischen dem Verstärkungselement (20) und dem zweiten Bauteil (6) Klebstoff eingeschlossen wird.

4. Verfahren (50) nach einem der vorhergehenden Ansprüche,
wobei das erste Bauteil (4) einen ersten Ausschnitt (12) aufweist, wobei das zweite Bauteil (6) einen zweiten Ausschnitt (14) aufweist und wobei das zweite Bauteil (6) derart auf das erste Bauteil (4) aufgelegt wird, dass der erste Ausschnitt (12) und der zweite Ausschnitt (14) in Fluchtung zueinander ausgerichtet werden.

5. Verfahren (50) nach einem der vorhergehenden Ansprüche,
ferner aufweisend den Schritt des Verspannens (64) des Hilfskörpers (24) an dem Formwerkzeug (8) mittels eines eine Zugkraft oder eine Druckkraft ausübenden Elements.

6. Verfahren (50) nach Anspruch 5,
wobei das Verspannen (64) das Einschrauben eines Bolzens (42) durch eine in dem Hilfskörper (24) angeordnete Öffnung (46) umfasst.

7. Verfahren (50) nach einem der vorhergehenden Ansprüche,
wobei das Verspannen (64) das Anpressen des Hilfskörpers (24) auf das zweite Bauteil (6) mit einem Aktuator (36) umfasst.

8. Verfahren (50) nach Anspruch 7,
wobei der Aktuator (36) mit einer Vakuumquelle (26) gekoppelt wird, die zum Evakuieren (60) verwendet wird.

9. System (2, 34, 40) zum Verbinden zweier Bauteile, aufweisend:
- ein Formwerkzeug (8),
- einen Hilfskörper (24),
- eine Vakuumfolie (22),
- eine Vakuumquelle (26), und
- einen Klebstoff,
wobei das Formwerkzeug (8) eine Werkzeugoberfläche (10) zum Aufnehmen eines ersten Bauteils (4) aufweist,
wobei der Hilfskörper (24) dazu ausgebildet ist, auf ein zweites Bauteil (6) aufgelegt zu werden und dabei einen Ausschnitt (14) des zweiten Bauteils (6) zu überdecken, wobei die Vakuumfolie (22) dazu ausgebildet ist, das auf das erste Bauteil (4) aufgelegte zweite Bauteil (6) unter Einschluss des Klebstoffs, den auf das zweite Bauteil (6) aufgelegten Hilfskörper (24) und zumindest einen das zweite Bauteil (6) umgebenden Abschlussbereich des ersten Bauteils (4) abzudecken, und wobei die Vakuumquelle (26) mit mindestens einer Öffnung (28) in der Vakuumfolie (22) oder dem Formwerkzeug (8) koppelbar ist, so dass ein von dem ersten Bauteil (4) und der Vakuumfolie (22) umschlossener Raum evakuierbar ist, **dadurch gekennzeichnet, dass**
das zweite Bauteil (6) einen mindestens bereichsweise den Ausschnitt (14) umlaufenden Flansch (16) aufweist, der sich von dem zweiten Bauteil (6) in eine von dem ersten Bauteil (4) abgewandte Richtung erstreckt, wobei der Hilfskörper (24) auf den Flansch (16) aufgelegt wird.

10. System (2, 34, 40) nach Anspruch 9,
wobei der Hilfskörper (24) eine gleitfähige Beschichtung aufweist.

11. System (2, 34, 40) nach Anspruch 10 oder 9,
wobei die Werkzeugoberfläche (10) eine Gewindebohrung (44) aufweist,
wobei der Hilfskörper (24) eine Öffnung (46) aufweist, die mit der Gewindebohrung (44) bei vorgesehenen Positionen des ersten Bauteils (4), des zweiten Bauteils (6) und des Hilfskörpers (24) fluchtet, und
wobei das System (2, 34, 40) ferner einen Bolzen (42) mit einem mit der Gewindebohrung (44) korrespondierendem Gewinde zum Verspannen des Hilfskörpers (24) an dem Formwerkzeug (8) aufweist.

12. System (2, 34, 40) nach einem der Ansprüche 9 bis 11,
ferner aufweisend einen Aktuator (36) zum Pressen des Hilfskörpers (24) auf das zweite Bauteil (6).

13. System (2, 34, 40) nach Anspruch 12,
ferner aufweisend eine mit dem Aktuator (36) gekoppelte Kraftregeleinheit (38), die dazu ausgebildet ist, die von dem Aktuator (36) auf den Hilfskörper (24) einwirkende Kraft zu erfassen und auf einen vorbestimmten Wert einzustellen.

## Claims

1. A method (50) for joining two components comprising the steps of:
- Placing (52) a first component (4) on a tool surface (10),
- placing (54) a second component (6) having a cut-out (14) on the first component (4) with the inclusion of an adhesive,
- placing (56) an auxiliary body (24) covering the cut-out (14) on the second component (6),
- covering (58) the second component (6), the auxiliary body (24) and at least one end region (23) of the first component (4) surrounding the second component (6) with a vacuum film (22),
- evacuating (60) the space (30) enclosed by the first component (4) and the vacuum film (22), and
- removing the vacuum foil (22) after the adhesive has cured,
**characterised in that**
the second component (6) has a flange (16) which surrounds the cutout (14) at least in regions and extends from the second component (6) in a direction facing away from the first component (4), the auxiliary body (24) being placed on the flange (16).

2. The method (50) according to claim 1,
further comprising the step of heating (66) a space between the first component (4) and the second component (6) in which the adhesive is located.

3. The method (50) according to claim 1 or 2,
further comprising the step of inserting (68) a reinforcing element (20) between the first component (4) and the second component (6), whereby adhesive is trapped between the first component (4) and the reinforcing element (20) and between the reinforcing element (20) and the second component (6).

4. The Method (50) according to any one of the preceding claims,
wherein the first component (4) comprises a first cut-out (12), wherein the second component (6) comprises a second cut-out (14), and wherein the second component (6) is placed on the first component (4) such that the first cut-out (12) and the second cut-out (14) are aligned with each other.

5. The method (50) according to any one of the preceding claims,
further comprising the step of clamping (64) the auxiliary body (24) to the forming tool (8) by means of an element exerting a tensile force or a compressive force.

6. The Method (50) according to claim 5,
wherein said clamping (64) comprises screwing a bolt (42) through an opening (46) arranged in said auxiliary body (24).

7. The method (50) according to any one of the preceding claims,
wherein said clamping (64) comprises pressing said auxiliary body (24) onto said second member (6) with an actuator (36).

8. The method (50) according to claim 7,
wherein the actuator (36) is coupled to a vacuum source (26) used for evacuation (60).

9. A system (2, 34, 40) for joining two components, comprising:
- a forming tool (8),
- an auxiliary body (24),
- a vacuum sheet (22),
- a vacuum source (26), and
- an adhesive,
wherein the moulding tool (8) has a tool surface (10) for receiving a first component (4),
wherein the auxiliary body (24) is adapted to be placed on a second component (6) while covering a cutout (14) of the second component (6),
the vacuum film (22) being designed to cover the second component (6) placed on the first component (4), including the adhesive, the auxiliary body (24) placed on the second component (6) and at least one end region of the first component (4) surrounding the second component (6), and
wherein the vacuum source (26) can be coupled to at least one opening (28) in the vacuum foil (22) or the moulding tool (8) so that a space enclosed by the first component (4) and the vacuum foil (22) can be evacuated
**characterised in that**
the second component (6) has a flange (16) which surrounds the cutout (14) at least in regions and extends from the second component (6) in a direction facing away from the first component (4), the auxiliary body (24) being placed on the flange (16).

10. The system (2, 34, 40) according to claim 9,
wherein the auxiliary body (24) has a slidable coating.

11. The system (2, 34, 40) according to claim 10 or 9,
wherein the tool surface (10) comprises a threaded bore (44),
wherein the auxiliary body (24) has an opening (46) aligned with the threaded bore (44) at intended positions of the first component (4), the second component (6) and the auxiliary body (24), and
wherein the system (2, 34, 40) further comprises a bolt (42) having a thread corresponding to the threaded hole (44) for clamping the auxiliary body (24) to the mould (8).

12. The system (2, 34, 40) of any one of claims 9 to 11,
further comprising an actuator (36) for pressing the auxiliary body (24) onto the second component (6).

13. The system (2, 34, 40) according to claim 12,
further comprising a force control unit (38) coupled to the actuator (36) and adapted to sense the force applied by the actuator (36) to the auxiliary body (24) and to adjust it to a predetermined value.

## Revendications

1. Procédé (50) d'assemblage de deux composants, comprenant les étapes consistant à :
- Disposer (52) un premier composant (4) sur une surface d'outil (10),
- placer (54) un second composant (6) ayant une découpe (14) sur le premier composant (4) avec l'inclusion d'un adhésif,
- placer (56) un corps auxiliaire (24) recouvrant la découpe (14) sur le deuxième composant (6),
- recouvrir (58) le deuxième composant (6), le corps auxiliaire (24) et au moins une zone d'extrémité (23) du premier composant (4) entourant le deuxième composant (6) avec un film sous vide (22),
- évacuer (60) l'espace (30) enfermé par le premier composant (4) et le film sous vide (22), et
- retirer la feuille de vide (22) après le durcissement de l'adhésif,
**caractérisé en ce que**
le deuxième composant (6) présente une bride (16) qui entoure la découpe (14) au moins par zones et s'étend depuis le deuxième composant (6) dans une direction opposée au premier composant (4), le corps auxiliaire (24) étant placé sur la bride (16).

2. Procédé (50) selon la revendication 1,
comprenant en outre l'étape consistant à chauffer (66) un espace entre le premier composant (4) et le second composant (6) dans lequel l'adhésif est situé.

3. Procédé (50) selon la revendication 1 ou 2,
comprenant en outre l'étape consistant à insérer (68) un élément de renforcement (20) entre le premier composant (4) et le second composant (6), dans lequel de l'adhésif est piégé entre le premier composant (4) et l'élément de renforcement (20) et entre l'élément de renforcement (20) et le second composant (6).

4. Procédé (50) selon l'une quelconque des revendications précédentes,
dans lequel le premier composant (4) comprend une première découpe (12), dans lequel le second composant (6) comprend une seconde découpe (14), et dans lequel le second composant (6) est placé sur le premier composant (4) de sorte que la première découpe (12) et la seconde découpe (14) sont alignées l'une avec l'autre.

5. Procédé (50) selon l'une quelconque des revendications précédentes,
comprenant en outre l'étape consistant à serrer (64) le corps auxiliaire (24) sur l'outil de formage (8) au moyen d'un élément exerçant une force de traction ou une force de com pression.

6. Procédé (50) selon la revendication 5,
dans lequel ledit serrage (64) comprend le vissage d'un boulon (42) à travers une ouverture (46) disposée dans ledit corps auxiliaire (24).

7. Procédé (50) selon l'une quelconque des revendications précédentes,
dans lequel le serrage (64) comprend la pression du corps auxiliaire (24) sur le second composant (6) avec un actionneur (36).

8. Procédé (50) selon la revendication 7,
dans lequel l'actionneur (36) est couplé à une source de vide (26) utilisée pour faire le vide (60).

9. Un système (2, 34, 40) pour joindre deux composants, comprenant :
- un outil de formage (8),
- un corps auxiliaire (24),
- une feuille de vide (22),
- une source de vide (26), et
- un adhésif,
ledit outil de formage (8) ayant une surface d'outil (10) pour recevoir un premier composant (4),
dans lequel le corps auxiliaire (24) est adapté pour être placé sur un second composant (6) tout en couvrant une découpe (14) du second composant (6),
le film sous vide (22) étant conçu pour couvrir le deuxième composant (6) placé sur le premier composant (4), y compris l'adhésif, le corps auxiliaire (24) placé sur le deuxième composant (6) et au moins une région d'extrémité du premier composant (4) qui entoure le deuxième composant (6), et
dans lequel la source de vide (26) peut être couplée à au moins une ouverture (28) dans la feuille à vide (22) ou l'outil de formage (8) de sorte qu'un espace enfermé par le premier composant (4) et la feuille à vide (22) peut être évacué.
**caractérisé en ce que**
le deuxième composant (6) présente une bride (16) qui entoure la découpe (14) au moins par zones et s'étend depuis le deuxième composant (6) dans une direction opposée au premier composant (4), le corps auxiliaire (24) étant placé sur la bride (16).

10. Système (2, 34, 40) selon la revendication 9,
dans lequel le corps auxiliaire (24) comprend un revêtement coulissant.

11. Système (2, 34, 40) selon la revendication 10 ou 9,
dans lequel la surface de l'outil (10) comprend un alésage fileté (44),
dans lequel le corps auxiliaire (24) a une ouverture (46) alignée avec l'alésage fileté (44) à des positions prévues du premier composant (4), du second composant (6) et du corps auxiliaire (24), et
dans lequel le système (2, 34, 40) comprend en outre un boulon (42) ayant des filets correspondant à l'alésage fileté (44) pour serrer le corps auxiliaire (24) sur l'outil de formage (8).

12. Système (2, 34, 40) selon l'une quelconque des revendications 9 à 11,
comprenant en outre un actionneur (36) pour presser le corps auxiliaire (24) sur le deuxième composant (6).

13. Système (2, 34, 40) selon la revendication 12,
comprenant en outre une unité de commande de force (38) couplée à l'actionneur (36), l'unité de commande de force (38) étant adaptée pour détecter la force appliquée par l'actionneur (36) au corps auxiliaire (24) et pour ajuster la force à une valeur prédéterminée.
